# EUROPEAN PATENT APPLICATION

(11) **EP 1 526 745 A2**
(43) Date of publication of application: **27.04.2005**
(21) Application number: 04025222.3
(22) Date of filing: 22.10.2004
(51) Int. Cl.: H04Q 7/22

(54) **Apparatus and method for maintaining broadcast channel using position information of mobile communication terminal**

(30) Priority: 23.10.2003 KR 2003074342
(71) Applicant: Samsung Electronics Co., Ltd., Suwon-si, Gyeonggi-do (KR)
(72) Inventor: Lee, Sang-No, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus and method for controlling a broadcast channel using position information of a mobile terminal. The broadcast channel control apparatus maintains a radio or TV broadcast channel currently broadcast to a user who is in motion when the same broadcast channel as the radio or TV broadcast channel is broadcast to a plurality of areas at different broadcast frequencies. The method for maintaining the same broadcast channel using a broadcast channel controller even though the user moves from a first area to a second area includes the steps of a) associating different broadcast frequencies for different areas with a selected broadcast channel, and storing the associated broadcast frequencies, b) receiving position information from the mobile terminal and receiving a broadcast frequency from the broadcast unit, and storing the received position information and the received broadcast frequency and c) comparing previous position information with current position information, determining whether the user moves from a first area to a second area, and providing the broadcast unit with a new broadcast frequency for providing the user with the broadcast channel even in the second area at the new broadcast frequency.

## Description

The present invention relates to an apparatus and method for controlling a broadcast channel, and more particularly to an apparatus and method for maintaining a radio or TV (television) broadcast channel currently being broadcast to a user who moves from an area where the radio or TV broadcast channel is broadcast at a first frequency to an area where the radio or TV broadcast channel is broadcast at a second frequency.

Typically, if a user travels over a large area through which a broadcast frequency of a broadcast channel changes to another frequency or bandwidth, the user must manually reset a tuner to the broadcast frequency of the broadcast channel to the other broadcast frequency to enable the user to continue to listen to the broadcast channel data in his current location. In more detail, if a conventional broadcast system broadcasts data of the same broadcast channel to a plurality of areas each at a different frequency, the user must manually reset a current radio channel to continue to receive the broadcast. In this case, if the user knows the broadcast frequency suitable for the current broadcast channel in a prescribed area in advance, he or she must manually enter the broadcast frequency in order to listen to broadcast data received via the broadcast channel at the highest broadcast reception rate. As a result users must remember different broadcast frequencies for every area in association with the same broadcast channel, resulting in greater inconvenience for the users, and even worse, the users must manually enter individual broadcast frequencies for every area.

In order to solve the aforementioned problems, a representative broadcast system for automatically selecting an optimum broadcast frequency capable of providing the user with the highest broadcast reception rate has been disclosed in Korean Patent Laid-open Publication No. 1998-015415, which is incorporated herein by reference. Referring to the above representative broadcast system example shown in the Korean Patent Laid-open Publication No. 1998-015415, a controller receives current area information from a GPS receiver and detects a broadcast frequency configured in the form of data, and automatically sets up a broadcast frequency suitable for the current driving area using the detected broadcast frequency. In order to provide the user with the aforementioned broadcast service, there is a need for a vehicle to install a GPS system therein. Although the broadcast frequency that is suitable for the current area is automatically determined, a broadcast channel associated with the selected broadcast frequency is not a broadcast channel that the user is currently receiving, but another broadcast channel associated with a prescribed broadcast frequency for enabling the current area to have a good broadcast reception rate. In other words, the aforementioned broadcast system searches for a prescribed broadcast frequency capable of providing a specific area (i.e., a current driving area) with the highest broadcast reception rate among a plurality of broadcast frequencies.

As stated above, in order to provide a user with the same broadcast channel data while the user moves from a current area to another area, the user must remember different broadcast frequencies of the same broadcast channel for every area, and must manually enter a broadcast frequency suitable for his or her current area in the conventional broadcast system. In order to solve these problems, the aforementioned broadcast system shown in Korean Patent Laid-open Publication No. 1998-015415 has disclosed an improved method for selecting the best broadcast channel capable selecting a broadcast frequency of the highest broadcast reception rate using a GPS function for use in a vehicle. However, there is a need for the aforementioned broadcast system to install an additional device such as a GPS system in the vehicle. Furthermore, the aforementioned conventional broadcast system unconditionally selects the broadcast channels with the highest reception rate for a corresponding area from among a plurality of broadcast channels, such that the user must still manually select a desired broadcast channel from among a plurality of broadcast channels.

Therefore, the present invention has been made in view of the above problems.
It is the object of the present invention to provide an apparatus and method for determining a current position of broadcast receiver using position information of a mobile terminal while the broadcast receiver is in motion, and continuously maintain an initial setup broadcast channel selected by a user.

This object is solved by the subject matter of the independent claims.

Preferred embodiments are defined in the dependent claims.

In accordance with one aspect of the present invention, the above object can be realized by an apparatus for maintaining a broadcast channel transmitted at a first frequency when the apparatus moves to an area where the broadcast channel is transmitted at a different frequency, comprising: a mobile terminal for receiving position information from a base station, and transmitting the position information to a broadcast channel controller; and a broadcast unit for receiving the first broadcast frequency selected by a user, and transmitting the first broadcast frequency to the broadcast channel controller, wherein the broadcast channel controller is connectable to the mobile terminal and the broadcast unit, associates the broadcast channel with different broadcast frequencies for different areas, stores the broadcast channel associated with different broadcast frequencies for the different every areas, stores the position information received from the mobile terminal and the broadcast frequency received from the broadcast unit, compares previous position information with current position information at each reception time of the position information, determines whether the apparatus moves from a first area to a second area using the result of the comparison, and provides the broadcast unit with a new broadcast frequency for providing the broadcast channel in the second area at the new broadcast frequency.

In accordance with another aspect of the present invention, there is provided a method for maintaining a broadcast channel received at a first frequency when a broadcast receiver moves to an area where the broadcast channel is transmitted at a different frequency, comprising the steps of: a) associating different broadcast frequencies for different areas with the broadcast channel, and storing the associated broadcast frequencies; b) periodically receiving position information from the mobile terminal and receiving a broadcast frequency from the broadcast unit, and storing the received position information and the received broadcast frequency; and c) comparing previous position information with current position information each time the position information is received, determining whether the broadcast receiver moves from a first area to a second area, and determining a new broadcast frequency for providing the broadcast channel in the second area at the new broadcast frequency.

The above features and other advantages of the present invention will be more clearly understood from the following detailed description taken in conjunction with the accompanying drawings, in which:
Fig. 1 is a block diagram of a mobile terminal for providing a user with position information, a broadcast channel controller, and a radio set in accordance with a preferred embodiment of the present invention;
Fig. 2 is a detailed block diagram of the components of the mobile terminal, the broadcast channel controller, and the radio set shown in Fig. 1;
Fig. 3 is a block diagram of a mobile terminal including a radio module in accordance with another preferred embodiment of the present invention;
Fig. 4 is a flow chart of control operations of the mobile terminal, the broadcast channel controller, and the radio set in accordance with a preferred embodiment of the present invention; and
Fig. 5 is a flow chart of control operations for enabling a user to maintain an initial setup broadcast channel to another area in accordance with another preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

The present invention can be utilized areas where data of a broadcast channel is broadcast to a plurality of areas at different broadcast frequencies. The present invention determines movement information, and changes the tuner of a broadcast receiver from a frequency associated with the first area to a frequency associated with the second area, such that the same broadcast channel can be received by the broadcast receiver irrespective of the user's movement between the first and second areas. For this purpose, the present invention controls a mobile terminal, instead of the conventional GPS system, to determine the receiver's movement from one area to another area upon receipt of a base station code used for determining the mobile terminal's current position. In this way, if the mobile terminal moves from one area to another area, the present invention continuously communicates with individual base stations in a corresponding cell area associated with the mobile terminal's current position, and analyzes channel information received from the base stations, such that the mobile terminal can determine information relating to the area into which the terminal has moved using a corresponding base station code.

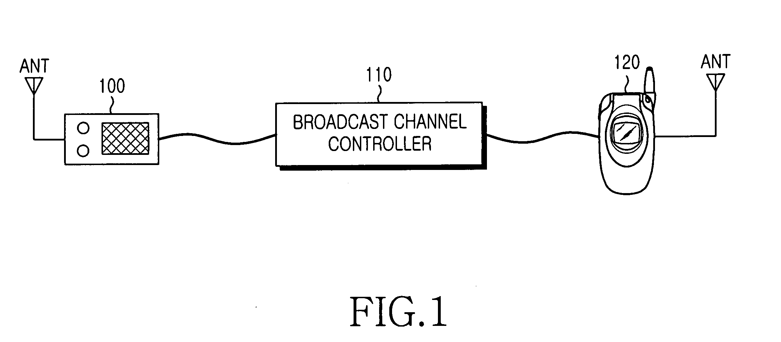

The relationship among a broadcast channel controller 110 for controlling a broadcast frequency according to the area information, a mobile terminal 120 for providing the broadcast channel controller 110 with current position information, and a radio set 100 for controlling its receiving frequency using the broadcast channel controller 110 will hereinafter be described with reference to Fig. 1.

The radio set 100, which can for example be used in a vehicle, is connected to the broadcast channel controller 110 for controlling a broadcast frequency of the radio set 100. The broadcast channel controller 110 is connected to the mobile terminal 120 via an interface unit (not shown). If the user powers on the radio set 100 and the broadcast channel controller 110, and selects a broadcast frequency, the radio set 100 transmits the selected broadcast frequency information to the broadcast channel controller 110, and the broadcast channel controller 110 sends a command to the mobile terminal 120 to transmit position information. The broadcast channel controller 110 continuously compares position information received from the mobile terminal 120 with previously received position information. If it is determined that the mobile terminal 120 moves from a first area to a second area, the broadcast channel controller 110 changes the broadcast frequency of the radio set 100 to another broadcast frequency that the broadcast channel is transmitted at in the current area (i.e., the second area). The mobile terminal 120 continuously communicates with individual base stations, such that the base stations can determine position information of the mobile terminal 120, and the mobile terminal 120 can also determine its own position. The radio set 100 uses the same frequency within a predetermined distance or area. For example, an FM broadcasting frequency of MBC broadcasting company is fixed to a specific frequency of 91.9 MHz in Seoul and Kyunggi-do areas in the Republic of Korea. However, if the radio set 100 moves from Kyunggi-do to Pusan, the broadcast channel controller 110 recognizes the movement from Kyunggi-do to Pusan, and determines a broadcast frequency corresponding to the MBC FM broadcast channel for use in Pusan indicative of the current position. In this case, the broadcast frequency for the Pusan MBC FM is fixed to a specific frequency of 88.9 MHz, the broadcast channel controller 110 changes the initial broadcast frequency of 91.9MHz to the new broadcast frequency of 88.9MHz so that that the user can continuously listen to the initial broadcast data or program of the initial broadcast frequency of 91.9 MHz via the new broadcast frequency of 88.9 MHz

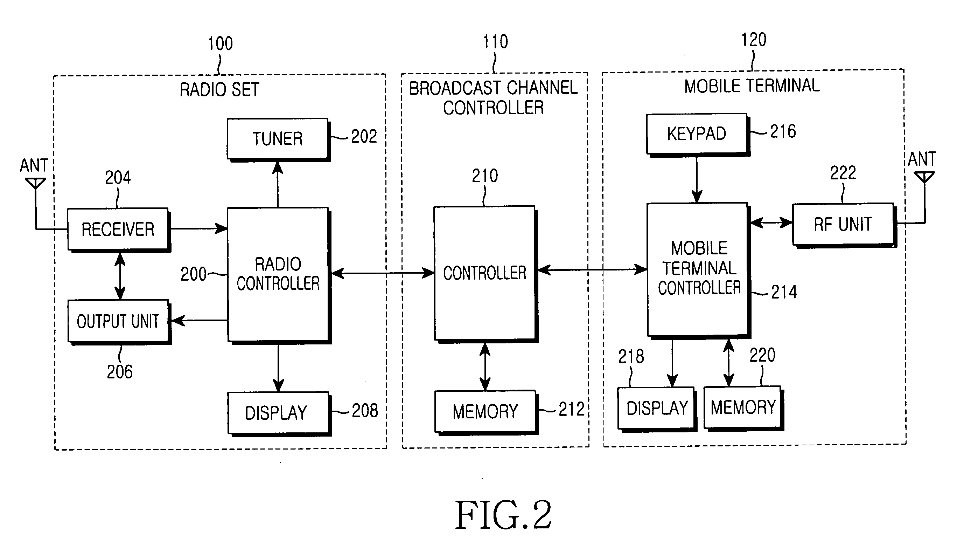

Fig. 2 is a detailed block diagram of the components of the mobile terminal 120, the broadcast channel controller 110, and the radio set 100 shown in Fig. 1.

The mobile terminal 120 includes a mobile terminal controller 214, a keypad 216, an RF (Radio Frequency) unit 222, a memory 220, and a display 218. The controller 214 analyzes synchronous channel (Sync CH) information received from the RF unit 222, recognizes a code value of a corresponding base station, and transmits the recognized code value to the broadcast channel controller 110.

Referring to the block diagram of the broadcast channel controller 110, the broadcast channel controller 110 includes a controller 210 and a memory 212, and further includes an interface (not shown) for connecting with the mobile terminal 120 and with the radio set 100.

In the case where the broadcast channel controller 110 receives broadcast frequency information from the radio set 100, and receives a code value of the base station from the mobile terminal 120, the controller 210 stores the broadcast frequency received from the radio set 100 as a current broadcast frequency, and stores a specific area corresponding to the broadcast frequency as a current area. The controller 210 transmits a command to the mobile terminal 120 for requesting transmission of the base station code value to the mobile terminal, and receives a currently received base station code value from the mobile terminal 120. The controller 210 recognizes area information corresponding to the base station code value received from the mobile terminal 120. The controller 210 analyzes a specific code indicative of area information contained in the received base station code value because base station code values for every area have unique codes indicative of individual area information, and recognizes corresponding area information associated with the specific code. The memory 212 contained in the broadcast channel controller 110 stores different broadcast frequencies for different areas associated with a broadcast channel indicative of the specific area associated with the base station code value, for example, the MBC FM broadcast channel. For example, the MBC FM serving as a single broadcast channel has different broadcast frequencies for every area, e.g., 88.9 MHz in Pusan, 95.3 MHz in Daegu, and 97.9 MHz in Pohang. In this way, the broadcast channel controller 110 stores in the memory 212 the different broadcast frequencies for each area , and compares an initial broadcast frequency of a first area with a plurality of broadcast frequencies for use in a second area when a user moves from the first area to the second area, such that the controller 110 determines a frequency for use in the second area associated with the initial broadcast frequency. In more detail, the broadcast channel controller 110 divides a base station into a plurality of groups in the same way as in the CDMA-2000 prescribed in 3GPP specifications, assigns different base station codes to individual groups, and uses the assigned base station codes. The divided base station groups cover a wide range. This wide range is similar to a frequency range of a current broadcast station. Therefore, the broadcast channel controller 110 matches individual different broadcast frequencies with one broadcast channel according to code values of the base station group, and stores the matched result in the memory 212.

The broadcast channel controller 110 stores in the memory 212 only a base station code of a specific area, where there is a change in the broadcast frequency due to the movement between areas, , and stores in the memory 212 broadcast frequencies of individual base station code values stored in association with the same broadcast channel in. For example, provided that the memory 212 stores code values of base stations associated with a prescribed connection area where a current broadcast frequency is changed to another broadcast frequency when the device moves either from a first area "A" to a second area "B" or from the second area "B" to the first area "A", if the broadcast channel controller 110 receives the base station code value indicative of the first area "A" and then receives the base station code value indicative of the second area "B", the controller 210 determines that the device has moved from the first area "A" to the area "B", and changes a current broadcast frequency to another broadcast frequency associated with the base station code value of the area into which the device has moved.

For example, in the case of using a vehicle, the vehicle radio tuner connects the mobile terminal 120 with the radio set 100, and contains the broadcast channel controller 110 including a memory for storing different broadcast frequencies associated with broadcast channels for different areas in such a way that the above broadcast frequency switching operation is made available. In the case of using a mobile terminal including a built-in radio set or TV, the mobile terminal 120 can automatically perform the above broadcast frequency switching operation, and its detailed description will hereinafter be described. In addition, the broadcast channel controller 110 for use in the vehicle may display a broadcast channel frequency of a desired area upon receiving a request signal from the user. The controller 210 determines whether the stored current area is equal to the recognized reception area. If it is determined that the stored current area is equal to the recognized reception area, the controller 210 requests that the mobile terminal 120 transmit a base station code value. Otherwise, if it is determined that the stored current area is different from the recognized reception area, the controller 210 reads a broadcast frequency corresponding to the currently-stored broadcast frequency from among a plurality of broadcast frequencies of a reception area. The controller 210 transmits the read broadcast frequency information to the radio set 100, and changes an initial broadcast frequency to another broadcast frequency associated with a current area.
The radio set 100 for receiving different broadcast frequencies for different areas from the broadcast channel controller 110 to maintain a specific broadcast channel while the user moves from one area to another area will hereinafter be described in detail. The radio set 100 includes a receiver 204 for receiving broadcast data, an output unit 206 for outputting the received broadcast data, a display 208 for displaying broadcast information, a tuner 202 for turning to specific frequencies, and a radio controller 200 for controlling overall operations of the radio set 100. If the user selects a broadcast frequency to listen to specific broadcast channel data, the radio controller 200 transmits a broadcast service associated with the selected broadcast frequency to the tuner 202. The radio controller 200 transmits currently-selected broadcast frequency information to the broadcast channel controller 110. If the radio controller 200 receives from the broadcast channel controller 110 broadcast frequency information that has changed due to the movement to a different area, the radio controller 200 changes a current broadcast frequency to the received broadcast frequency, and outputs the broadcast data via the output unit 206 at the changed broadcast frequency.

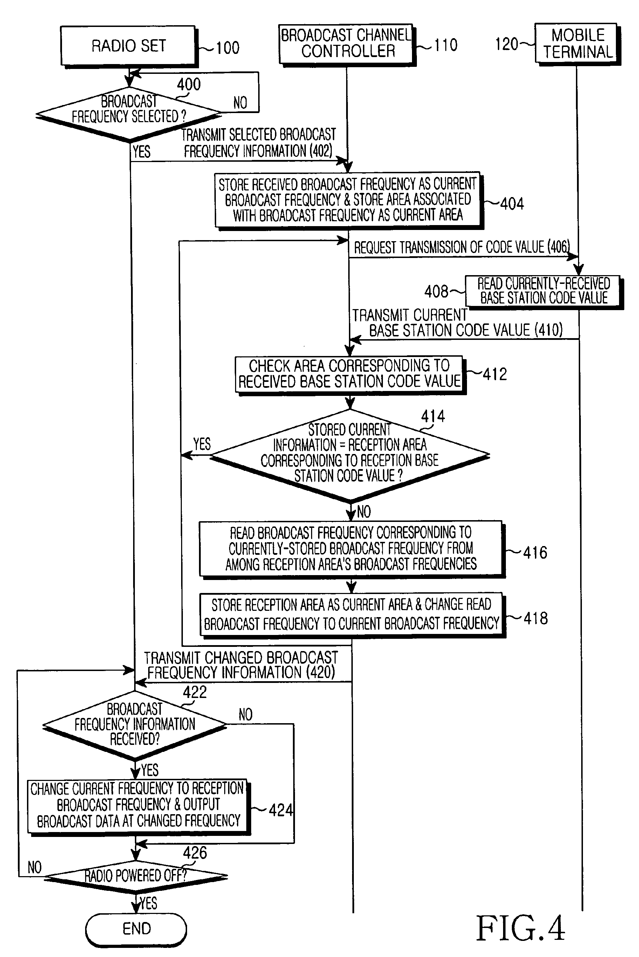

Fig. 4 is a flow chart of the operation of the mobile terminal, the broadcast channel controller, and the radio set capable of maintaining a broadcast channel of the radio set. It is assumed that the radio set 100 serves as a vehicle radio set 100.

The radio set 100 is powered on, and determines whether the user selects a broadcast frequency at step 400. If it is determined that the user has selected the broadcast frequency to receive a desired broadcast service, the radio set 100 transmits the selected broadcast frequency information to the broadcast channel controller 110 at step 402. The broadcast channel controller 110 sets a broadcast frequency received from the radio set 100 to be a current broadcast frequency, and stores the set broadcast frequency in the memory 212 at step 404. The broadcast channel controller 110 transmits to the mobile terminal 120 a command requesting transmission of a base station code value at step 406. The mobile terminal 120 reads a currently-received base station code value from the memory 220 at step 408, and transmits the read base station code value to the broadcast channel controller 110 at step 410. The broadcast channel controller 110 determines area information associated with a base station code value received from the mobile terminal 120 at step 412. The broadcast channel controller 110 analyzes a specific code indicative of area information contained in the received base station code value because base station code values for every area have unique codes indicative of individual area information, such that it can recognize a corresponding area associated with the specific code. The broadcast channel controller 110 determines at step 414 whether the current area information stored at step 404 is equal to the reception area information determined at step 412. If it is determined at step 414 that the current area information stored at step 404 is equal to the reception area information checked at step 412, the broadcast channel controller 110 commands the mobile terminal 120 to transmit a new base station code value at step 406. Otherwise, if it is determined at step 414 that the current area information stored at step 404 is different from the reception area information checked at step 412, the broadcast channel controller 110 reads a broadcast frequency associated with a currently-stored broadcast frequency from among a plurality of broadcast frequencies for the reception area at step 416, and goes to step 418 where the frequency is changed to at the current broadcast frequency. The broadcast channel controller 110 transmits changed broadcast frequency information to the radio set 100 at step 420. If the radio set 100 receives broadcast frequency information at step 422, it changes a current broadcast frequency to the received broadcast frequency, and outputs broadcast data at the changed broadcast frequency at step 424. The radio set 100 determines whether it is powered off at step 426. If it is determined that the radio set 100 is powered off at step 426, the radio set 100 terminates all of its operations. Otherwise, if it is determined that the radio set 100 is not powered off at step 426, the process returns to step 422 the radio set 100 determines whether the broadcast frequency information is transferred from the broadcast channel controller 110.

The above-identified operations of Fig. 4 are generated when the radio set 100 or a TV set is a separate unit from the mobile terminal 120. The broadcast channel controller 110 connects to the mobile terminal 120 and a broadcast device such as the radio set 100 and controls the radio set 100. The broadcast channel controller 110 receives channel or frequency information of a broadcast station for currently providing the user with desired broadcast data, and stores the received channel or frequency information. The broadcast channel controller 110 receives a base station code value from the mobile terminal 120, and stores the received base station code value. The broadcast channel controller 110 continuously compares the stored base station code value with the received base station code value. In this case, if the broadcast channel controller 110 detects a base station code value associated with a boundary area where a current broadcast frequency is changed to another broadcast frequency, it changes the currently-stored broadcast frequency to a broadcast frequency associated with the changed area. The user can continuously listen to broadcast data from his or her desired broadcast station even though the frequency of the broadcast data is changed to another frequency due to the user's movement between areas. Upon receiving a request from the user, the broadcast channel controller 110 may search for an audible broadcast frequency fixed to the user's current area.

In this embodiment, the vehicle includes a broadcast channel controller 110 to control a broadcast frequency according to the user's movement between areas.

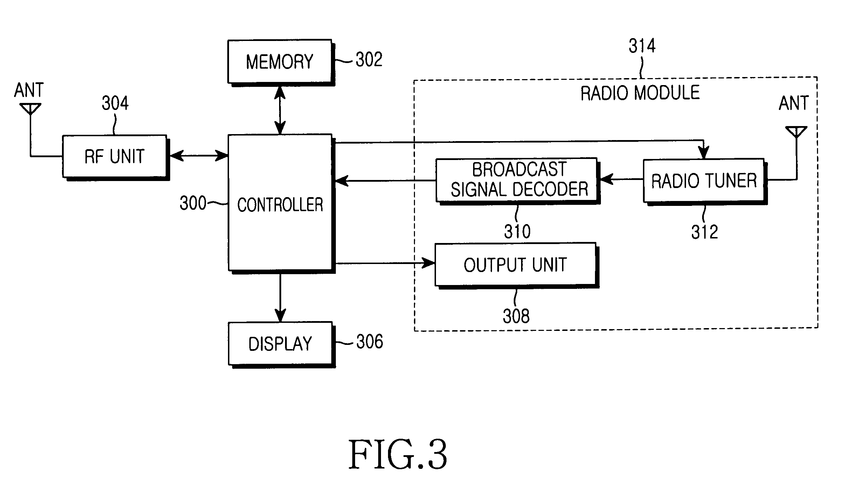

The mobile terminal with a radio or TV set can automatically control the broadcast frequency, and its detailed description will hereinafter be described with reference to Fig. 3. Fig. 3 is a block diagram illustrating a mobile terminal including a broadcast device in accordance with another preferred embodiment of the present invention.

Referring to Fig. 3, the mobile terminal 120 includes a radio module 314, a controller 300, an RF unit 304, a memory 302, and a display 306.

The controller 300 controls overall operations of the mobile terminal 120. Particularly, upon receipt of movement between areas, the controller 300 maintains a broadcast channel using the received position information indicative of the current area. If the user selects a radio function and a broadcast frequency, the controller 300 sets a specific area associated with a current base station code value received via the RF unit 304 to a current area, determines the selected broadcast frequency to be a current broadcast frequency, and stores the determined broadcast frequency in the memory 302. The controller 300 receives broadcast channel data at a broadcast frequency selected by the radio tuner 312, and outputs the received broadcast channel data to the output unit 308 via the broadcast signal decoder 310. The controller 300 determines whether reception area information corresponding to the received base station code value is equal to the stored current area information. The controller 300 analyzes a specific code indicative of area information contained in the received base station code value and since base station code values for every area have unique codes indicative of individual area information, the controller 300 can recognize corresponding area information associated with the specific code. The controller 300 determines that the stored current area information is equal to the determined reception area information. If it is determined that the stored current area information is equal to the determined reception area information, the controller 300 determines whether the reception area information continuously received via the RF unit 304 is equal to the current area information. Otherwise, if it is determined that the stored current information is different from the checked reception area information, the controller 300 reads from memory 302 a broadcast frequency for providing the user with the same broadcast channel data as that of the stored current broadcast frequency from among a plurality of reception area broadcast frequencies stored in the memory 302. The memory 302 stores area information associated with the base station code value, and different broadcast frequencies for every area in association with the same broadcast channel such as the MBC FM broadcast channel. The controller 300 changes a current broadcast frequency to the read broadcast frequency, stores the changed broadcast frequency as a new current broadcast frequency, and stores a broadcast reception area as a current area. The controller 300 controls the radio tuner 312 to receive the broadcast data at the changed broadcast frequency, and outputs the broadcast data received via the changed broadcast frequency to the output unit 308.

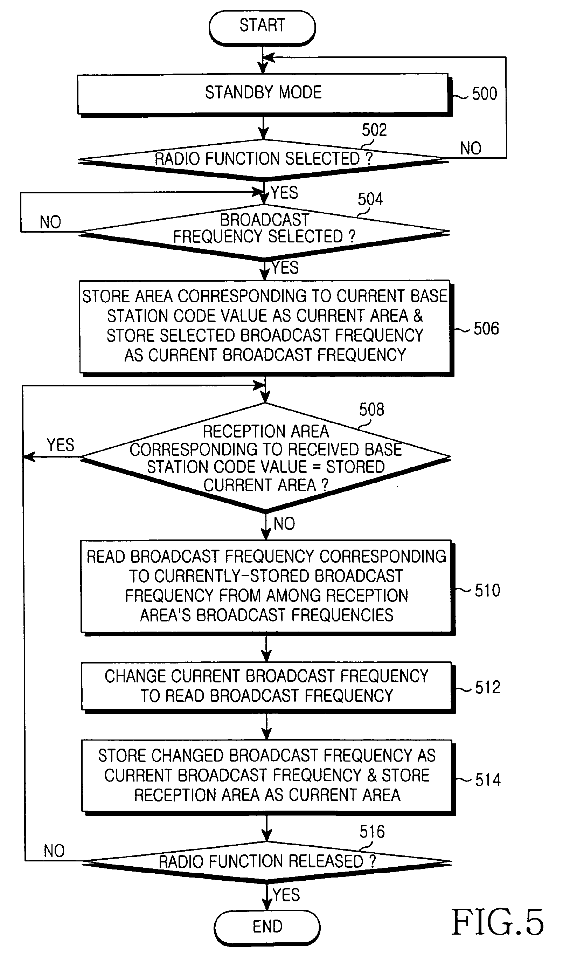

If the radio module 314 is contained in the mobile terminal as shown in Fig. 3 and the user moves from one area to another area, a method for controlling the broadcast channel will hereinafter be described with reference to Fig. 5. Fig. 5 is a flow chart illustrating control operations for enabling the user to maintain an initial setup broadcast channel even though the user moves from a current area to another area in accordance with another preferred embodiment of the present invention.

The controller 300 first maintains a standby mode at step 500. If the user selects a radio function at step 502, the controller 300 determines whether the user selects a desired broadcast frequency at step 504. If the user has selected a broadcast frequency at step 504, the controller 300 stores a specific area associated with the current base station code value received via the RF unit 304 as a current area, and stores the selected broadcast frequency as a current broadcast frequency. The controller 300 outputs broadcast data at a broadcast frequency selected by the radio module 314, and determines whether a reception area associated with the received base station code value is equal to the stored current area at step 508. During this process of determining the base station code value, the controller 300 analyzes a specific code indicative of area information contained in the received base station code value, and since base station code values for every area have unique codes indicative of individual area information, can recognize corresponding area information associated with the specific code. The controller 300 determines that the stored current area information is equal to the determined reception area information. If it is determined that the stored current area information is equal to the determined reception area information, the controller 300 determines whether the successively-received reception area information is equal to the current area information. Otherwise, if it is determined that the stored current area information is different from the determined reception area information at step 508, the controller 300 reads from memory a broadcast frequency for providing the user with the same broadcast channel data as that of the stored current broadcast frequency from among a plurality of broadcast frequencies contained in the reception area at step 510, and goes to step 512. The controller 300 changes a current broadcast frequency to the read broadcast frequency of the step 510 at step 512, stores the changed broadcast frequency as a current broadcast frequency, and stores the reception area as a current area at step 514. The controller 300 outputs broadcast data at the changed broadcast frequency, and determines whether the radio function is canceled at step 516. If it is determined that the radio function is not canceled at step 516, the controller 300 returns to the step 508. Otherwise, if the radio function has been canceled at step 516, the controller 300 terminates all of its operations.

Provided that the radio or TV set is contained in the mobile terminal as shown in Fig. 5, the controller 300 recognizes a current broadcast frequency when the radio set is powered on, receives a current base station code value from the RF unit 304, and stores a base station code value and currently-received broadcast frequency information in the memory 302. If the user begins to move the mobile terminal from one area to another area, a base station code value is changed to another code value due to the movement between the two areas. Upon receiving a base station code value associated with a specific area where a current broadcast frequency is changed to another broadcast frequency in association with the same broadcast channel, the controller 300 compares the received base station code value with a frequency value previously stored in the memory 302. The controller 300 reads a changed frequency of the currently broadcast data, stores the changed broadcast frequency as a current broadcast frequency, and outputs the data to the user. The controller 300 changes a broadcast frequency to another broadcast frequency, and controls the display 306 to display the changed broadcast frequency thereon. Furthermore, the controller 300 may control the display 306 to display a frequency of a broadcast station channel audible in a current area.

As stated above, although data of the same broadcast channel is broadcast to a plurality of areas fixed to different broadcast frequencies, the present invention maintains a radio or TV broadcast channel currently broadcast to a user using position information of a mobile terminal.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. For example, although the present invention adapts the radio set as a broadcast device for providing the user with the broadcast service, it is applicable to all kinds of broadcast devices (e.g., TV sets, etc.) capable of providing a user with a variety of broadcast services. Presently, a variety of mobile terminals capable of providing the user with only the MP3 or streaming service are commercially manufactured. If an improved manufactured product with a radio function is newly developed or adapted to a variety of current TV phones, the user who is in motion can continuously view or listen to either initial broadcast data transferred from a desired broadcast station or optimum broadcast data suitable for his or her current area without any inconvenience. The next generation broadcast service such as a DMB (Digital Multimedia Broadcasting) service is now being developed by a representative specific broadcast station (e.g., KBS (Korean Broadcasting System) company, etc.) to provide users with regional DMB broadcast services for every area, such that the present invention is applicable to the DMB service. In addition, although the user moves from one area to another area, the present invention is applicable to a variety of mobile devices, for example, a smart phone (e.g., Samsung MITs phone manufactured by the same applicant as the present invention) and a PDA (Personal Digital Assistant), etc.

As apparent from the above description, the present invention provides an apparatus and method for controlling a broadcast channel, which enables a user to continuously maintain a currently TV or radio broadcast channel data even though the user travels over a large area or moves from one area to another area, and also enables the user to search for an optimum broadcast frequency suitable for a corresponding broadcast station from among a plurality of broadcast frequencies when the user travels over a large area or moves from one area to another area, resulting in greater convenience for the user. Therefore, the user can continuously view and listen to initially desired sports live or other programs irrespective of his or her movement between broadcast areas.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An apparatus for maintaining a broadcast channel transmitted at a first frequency when the apparatus moves to an area where the broadcast channel is transmitted at a different frequency, comprising:
a mobile terminal for periodically receiving position information from a base station, and transmitting the position information to a broadcast channel controller; and
a broadcast unit for receiving the first broadcast frequency selected by a user, and transmitting the first broadcast frequency to the broadcast channel controller,
wherein the broadcast channel controller is connectable to the mobile terminal and the broadcast unit, associates the broadcast channel with different broadcast frequencies for different areas, stores the broadcast channel associated with different broadcast frequencies for the different areas, stores the position information received from the mobile terminal and the broadcast frequency received from the broadcast unit, compares previous position information with current position information at each reception time of the position information, determines whether the apparatus moves from a first area to a second area using the result of the comparison, and provides the broadcast unit with a new broadcast frequency for providing the broadcast channel in the second area at the new broadcast frequency.

2. The apparatus as set forth in claim 1, wherein the position information is received from one of a base station code value transferred from the base station to the mobile terminal and a GPS signal.

3. The apparatus as set forth in claim 1 or 2, wherein the broadcast channel controller stores a common base station code value for the different areas, associates different broadcast frequencies for different areas with the same broadcast channel, and stores the associated broadcast frequencies.

4. The apparatus as set forth in claim 1 or 2, wherein the broadcast channel controller stores a base station code value of a boundary area where the first area is changed to the second area, associates different broadcast frequencies for different areas with the same broadcast channel, and stores the associated broadcast frequencies.

5. The apparatus as set forth in one of claims 2 to 4, wherein the broadcast channel controller compares a base station code value contained in the previous position information with a base station code value contained in the current position information, and determines that the apparatus has moved from the first area to the second area when the base station code value contained in the previous position information is different from the base station code value contained in the current position information.

6. A mobile communication terminal apparatus with a broadcast service function, comprising:
an RF unit for receiving position information from a base station;
a memory for storing different broadcast frequencies for different areas with the same broadcast channel, and storing the received position information and a current broadcast frequency;
a radio module for providing a broadcast service at a first broadcast frequency, and providing the memory with the first broadcast frequency; and
a controller for associating different broadcast frequencies for different areas for the same broadcast channel, for determining whether a apparatus moves from a first area to a second area, and providing the radio module with a new broadcast frequency for providing the broadcast service in the second area .

7. The apparatus as set forth in claim 6, wherein the position information is received from at least one a base station code value transferred from the base station to the mobile terminal, and a GPS signal.

8. The apparatus as set forth in claim 6 or 7, wherein the memory stores a common base station code value for every area, associates different broadcast frequencies for different areas with the same broadcast channel, and stores the associated broadcast frequencies.

9. The apparatus as set forth in one of claims 6 to 8, wherein the broadcast channel controller stores a base station code value of a boundary area where the first area is changed to the second area, associates different broadcast frequencies for different areas with the same broadcast channel, and stores the associated broadcast frequencies .

10. The apparatus as set forth in claim 7, wherein the controller compares a base station code value contained in the previous position information with other base station code value contained in the current position information, and determines that the apparatus has moved from the first area to the second area when the base station code value contained in the previous position information is different from the base station code value contained in the current position information.

11. A method for maintaining a broadcast channel received at a first frequency when a broadcast receiver moves to an area where the broadcast channel is transmitted at a different frequency, comprising the steps of:
a) associating different broadcast frequencies for different areas with the broadcast channel, and storing the associated broadcast frequencies;
b) periodically receiving position information from the mobile terminal and receiving a broadcast frequency from the broadcast unit, and storing the received position information and the received broadcast frequency; and
c) comparing previous position information with current position information each time the position information received, determining whether the broadcast receiver moves from a first area to a second area, and determining a new broadcast frequency for providing the broadcast channel at the new broadcast frequency.

12. The method as set forth in claim 11, further comprising the step of continuing to receive position information from the mobile terminal.

13. The method as set forth in claim 11 or 12, wherein the position information is received from one of a base station code value transferred from the base station to the mobile terminal, and a GPS signal.

14. The method as set forth in claim 13, wherein step (c) for comparing the previous position information with the current position information to determine whether the broadcast receiver moves from the first area to the second area, includes the step of:
c1) comparing a base station code value contained in the previous position information with a base station code value contained in the current position information, and determining that the broadcast receiver has moved from the first area to the second area when the base station code value contained in the previous position information is different from the base station code value contained in the current position information.

15. A method for controlling a mobile terminal which includes a radio module to perform a radio function, and periodically receives position information from a base station, comprising the steps of:
a) associating different broadcast frequencies for different areas with the same broadcast channel, storing the associated broadcast frequencies, and storing the received position information and a broadcast frequency selected by a user; and
b) comparing previous position information with current position information, determining whether the mobile terminal moves from a first area to a second area, providing the radio module with a new broadcast frequency for providing broadcast channel at the new broadcast frequency in the second area at the new broadcast frequency.

16. The method as set forth in claim 15, further comprising the step of continuing to compare the previous position information with the current position information.

17. The method as set forth in claim 15 or 16, wherein the position information is received from one of a base station code value transferred from the base station, and a GPS signal.
